(19) Europäisches Patentamt
European Patent Office
Office européen des brevets

(11) Publication number: **0 137 857 B1**

# EUROPEAN PATENT SPECIFICATION
## published in accordance with Art. 158(3) EPC

(45) Date of publication of patent specification: 29.05.91  (51) Int. Cl.⁵: **G05B 19/403**

(21) Application number: 84901233.1

(22) Date of filing: 27.03.84

(86) International application number:
**PCT/JP84/00134**

(87) International publication number:
**WO 84/03956 (11.10.84 84/24)**

(54) NUMERICAL CONTROL METHOD.

(30) Priority: 28.03.83 JP 52016/83

(43) Date of publication of application:
24.04.85 Bulletin 85/17

(45) Publication of the grant of the patent:
29.05.91 Bulletin 91/22

(84) Designated Contracting States:
**DE FR GB**

(56) References cited:
**FR-A- 2 475 757**
**JP-A- 5 248 185**
**JP-A- 5 289 874**
**JP-A- 5 692 604**

(73) Proprietor: **FANUC LTD.**
**3580, Shibokusa Aza-Komanba, Oshino-mura Minamitsuru-gun, Yamanashi 401-05(JP)**

(72) Inventor: **KOMIYA, Hidetsugu**
**2-30-7, Hirayama Hino-shi**
**Tokyo 191(JP)**

(74) Representative: **Billington, Lawrence Emlyn et al**
**HASELTINE LAKE & CO Hazlitt House 28 Southampton Buildings Chancery Lane London WC2A 1AT(GB)**

EP 0 137 857 B1

## Description

This invention relates to a numerical control method and, more particularly, to a numerical control method well-suited for application to a machine tool such as, for example only, a multi-spindle automatic lathe.

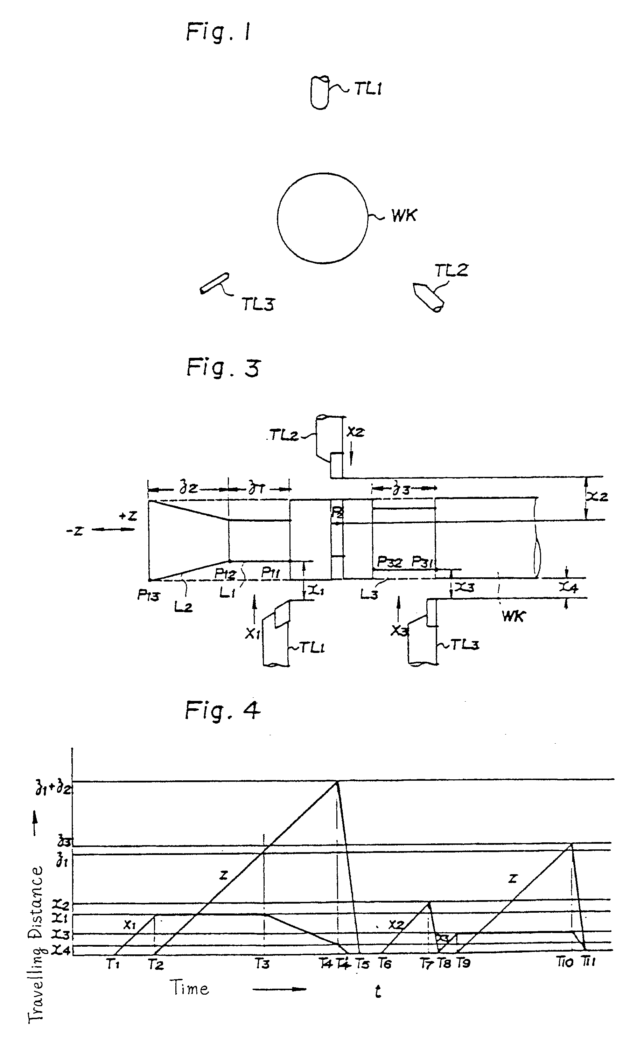

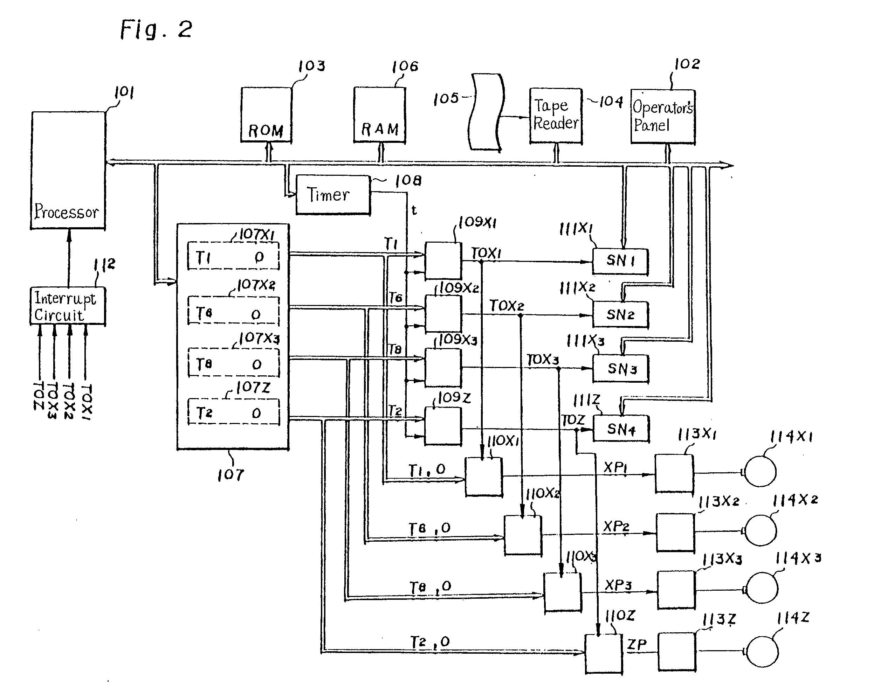

As shown in Fig. 1, a multi-spindle automatic lathe, which is for the purpose of shortening machining time and fostering mass production, has a number of mutually independently movable shafts (tools) $TL_1$ through $TL_3$ arrayed about a workpiece WK. The arrangement is such that the lathe subjects the workpiece WK to prescribed machining by applying machining performed by one tool followed by machining performed by a subsequent one of the tools when the preceding machining is completed. However, in order to make it possible to control the movement of each tool independently in such a prior-art multi-spindle automatic lathe, a cam rotated by a rotary shaft, not shown, is provided for each and every tool, and it is arranged so that the workpiece is subjected to prescribed machining by moving the tools toward the workpiece independently owing to rotation of the cams. This results in structural complexity and higher cost. Furthermore, though multi-spindle automatic lathes may be controlled numerically, the creation of NC data is troublesome.

US-A-4053819 discloses a numerical control system for a lathe wherein movement of a tool is controlled in dependence upon data from a tape, but wherein the complex control of the movement of a plurality of tools is not addressed.

An object of the present invention is to provide a novel numerical control method in which provision of cams for a plurality of tools is unnecessary, and through which NC data can be created in a simple manner and numerical control performed on the basis of such NC data.

Another object of the present invention is to provide an effective numerical control method suitable for use in controlling a multi-spindle automatic lathe, for example.

According to the present invention there is provided a method for numerically controlling a machine tool having a plurality of tools each movable along its own respective axis, the positions of the tools being controlled in dependence upon NC data provided in a suitable storage medium, said method comprising specifying in said NC data the desired positions of each tool at respective successive instants in time, or rotational angles of a predetermined rotary shaft, monitoring elapsed time or the rotational angle of said shaft during operation of the machine tool and, when any instant of time or shaft rotational angle specified for any tool is reached, subsequently using the next following stored data relevant to that tool to control the movement of that tool up to the next instant of time or shaft rotational angle again specified for that tool, whereby the tools are controlled independently of one another but in such a way that they can operate upon a single workpiece, the tools all being in respective predetermined positions at predetermined times or shaft rotational angles.

In embodiments of the present invention there are created NC data which indicate the correspondence between time and position for every axis of movement, or NC data which indicate the correspondence between a rotational angle of a predetermined rotary shaft and position for every axis of movement, wherein whenever elapsed time or the rotational angle of the rotary shaft becomes equal to a time or rotational angle specified by NC data in a currently prevailing block, a position along a predetermined axis of movement is controlled in accordance with NC data in a succeeding block.

Embodiments of the invention may further provide a numerical control method which includes creating, for every axis of movement, a relation between time and a position along the axis of movement or a relation between a rotational angle and a position along the axis of movement, the relation serving as numerical control data, controlling each axis of movement based on the numerical control data, monitoring elapsed time or the rotational angle and, whenever the elapsed time or rotational angle attains a time or rotational angular position specified by the numerical control data for each axis of movement, controlling the axis of movement in accordance with succeeding numerical control data. According to this numerical control method, NC data can be created in simple fashion so that the method is well-suited for use in controlling a multi-spindle automatic lathe or the like.

Brief Description of the Drawings

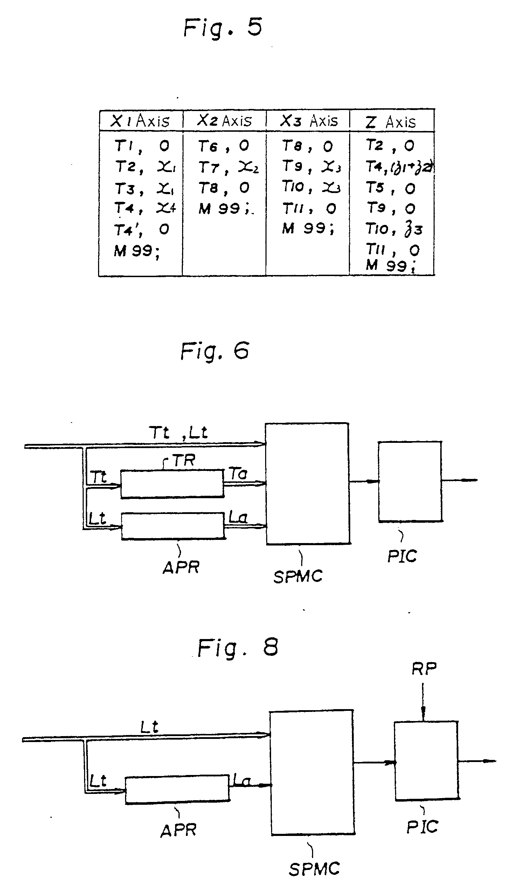

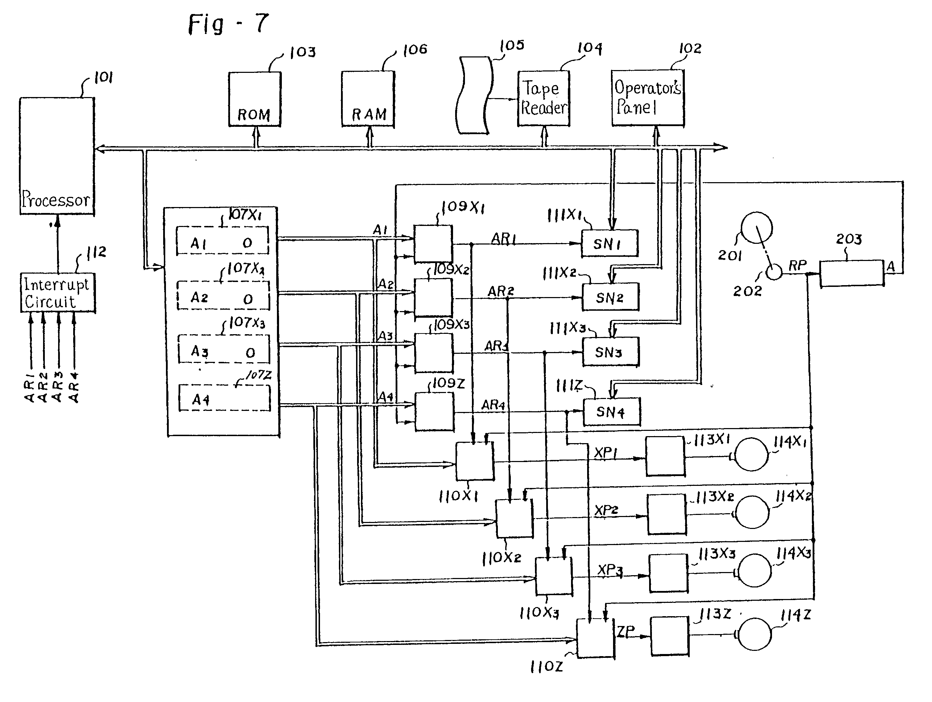

Fig. 1 is a view for describing a multi-spindle lathe, Fig. 2 is a block diagram of an NC apparatus to which the present invention is applied, Fig. 3 is a view for describing a shape machined according to the present invention, Fig. 4 is a view of curves showing the relation between position and time for each axis of movement for the purpose of obtaining the machined shape shown in Fig. 3, Fig. 5 is a view for describing NC data for the purpose of obtaining the machined shape shown in Fig. 3, Fig. 6 is a block diagram of a pulse distributor circuit in Fig. 2, Fig. 7 is another block diagram of an NC apparatus to which the present invention is applied, and Fig. 8 is a block diagram of a pulse distributor circuit in Fig. 7.

Fig. 2 is a block diagram of an embodiment utilising the present invention. Hereafter a case will be described wherein a part having the shape shown in Fig. 3 is machined by a multi-spindle automatic lathe which includes three tools $TL_1$, $TL_2$, $TL_3$. In the description it will be assumed that $X_1$, $X_2$ and $X_3$ axes are the axes along which the first, second and third tools $TL_1$, $TL_2$, $TL_3$ are movable, and that the Z axis is the axis along which the workpiece WK is moved longitudinally.

When an NC data read operation is initiated by an operator's panel 102, a processor 101, under the control of a control program stored in a ROM 103, is operable to deliver an NC data read command to a data reader 104 to read numerical control data (NC data) punched in a paper tape 105 and store the read NC data in a RAM 106. If we assume that the part having the shape shown in Fig. 3 is to be machined, then a relation (time chart) between position and time for each of the axes of movement will be as illustrated in Fig. 4. The NC data are created in accordance with the time chart and are stored punched into the paper tape 105. More specifically, the NC data are created in the following form and punched into the paper tape 105:

$X_1$      $T_1$, 0; $T_2$, $x_1$; $T_3$, $x_1$; $T_4$, $x_4$; $T_4{}'$, 0; M99;
$X_2$      $T_6$, 0; $T_7$, $x_2$; $T_8$, 0; M99;
$X_3$      $T_8$, 0; $T_9$, $x_3$; $T_{10}$, $x_3$; $T_{11}$, 0; M99;
$Z$      $T_2$, 0; $T_4$, ($z_1 + z_2$); $T_5$, 0; $T_9$, 0; $T_{10}$, $z_3$; $T_{11}$, 0; M99;

where M99 signifies the end of the command for each axis. Accordingly, by reading the NC data, these data will be stored for each axis in the RAM 106 in order of time as shown in Fig. 5.

When an NC control start signal is issued by the operator's panel 102 after the NC data are stored in the RAM 106, the processor 101 reads a first item of NC data for each axis out of the RAM 106, that is, reads $T_1$, 0; with regard to the $X_1$ axis, $T_6$, 0; with regard to the $X_2$ axis, $T_8$, 0; with regard to the $X_3$ axis, and $T_2$, 0; with regard to the Z axis, stores these data in respective registers $107X_1$, $107X_2$, $107X_3$ and $107Z$ of a register section 107, and initiates the timing operation of a timer 108. Of the first items of NC data for these axes, times $T_1$, $T_6$, $T_8$, $T_2$ are applied to respective comparators $109X_1$, $109X_2$, $109X_3$ and $109Z$. Further, the first items of NC data $T_1$, 0; $T_6$, 0; $T_8$, 0; $T_2$, 0; are applied to respective pulse distributor circuits $110X_1$, $110X_2$, $110X_3$, $110Z$. As shown in Fig. 6, the pulse distributor circuits $110X_1$, $110X_2$, $110X_3$, $110Z$ each have a position register APR (initial value zero), a time register TR (initial value zero), an arithmetic unit SPMC, and a well-known pulse interpolator PIC. Let us assume that a position commanded by the NC data is $L_t$, that a commanded position in a preceding block stored in the position register APR is $L_a$, that a time commanded by the NC data is $T_t$, and that a commanded time in the preceding block stored in the time register TR is $T_a$. The arithmetic unit SPMC calculates an incremental value $L_i$ and a feedrate $F_i$ based on the following equations:

$$L_i = L_t - L_a \quad (1)$$
$$F_i = |L_t - L_a| / (T_t - T_a) \quad (2)$$

and delivers these to the pulse interpolator PIC. The latter performs a well-known pulse interpolation operation based on $L_i$ and $F_i$ to produce distributed pulses having a frequency proportional to $F_i$. It should be noted that the content of the position register APR and of the time register TR is replaced by $L_t$, $T_t$, respectively, after the operations of Eqs. (1), (2) are performed.

When the first items of NC data are applied to the pulse distributor circuits $110X_1$, $110X_2$, $110X_3$, $110Z$, Eqs. (1), (2) are evaluated. Since the results of the computations will be zero, however, no distributed pulses are produced.

Meanwhile, the comparators $109X_1$, $109X_2$, $109X_3$, $109Z$ constantly determine whether a present time t has become equal to times $T_1$, $T_6$, $T_8$, $T_2$ applied thereto from the register section 107. The comparator $109X_1$ produces a time-over signal $TOX_1$ if $t = T_1$ holds, the comparator $109Z$ a time-over signal TOZ if $t = T_2$ holds, the comparator $109X_2$ a time-over signal $TOX_2$ if $t = T_6$ holds, and the comparator $109X_3$ a time-over signal $TOX_3$ if $t = T_8$ holds. When the time-over signals $TOX_1$, $TOX_2$, $TOX_3$, TOZ are generated, the corresponding pulse distributor circuits $110X_1$, $110X_2$, $110X_3$, $110Z$ immediately cease their pulse distribution operations and corresponding counters $111X_1$, $111X_2$, $111X_3$, $111Z$ have their states (initial value 1) $SN_1$, $SN_2$, $SN_3$, $SN_4$ incremented by one in accordance with the following expressions:

$$SN_1 + 1 \rightarrow SN_1, SN_2 + 1 \rightarrow SN_2,$$
$$SN_3 + 1 \rightarrow SN_3, SN_4 + 1 \rightarrow SN_4$$

The time-over signals $TOX_1$, $TOX_2$, $TOX_3$, TOZ enter an interrupt circuit 112 to interrupt the processor 101 immediately. When this occurs, the processor 101 reads the state of the counters ($111X_1$, $111X_2$, $111X_3$, $111Z$) associated with the axes of movement for which the time-over signals have been generated, goes to the RAM 106 to read out the NC data designated by these counters, and delivers the NC data to the register section 107. These NC data are delivered to the comparators and pulse distributor circuits of the corresponding axes.

If we take Figs. 3 and 4 as an example, the time-over signal $TOX_1$ is generated and the state

$SN_1$ of counter $111X_1$ is incremented to 2 when $t = T_1$ holds. As a result, the processor 101 goes to the RAM 106 to read out NC data (a second item of NC data) $T_2$, $x_1$; concerning the $X_1$ axis, which data is designated by the state $SN_1$ of the counter. The processor sets this data in the register $107X_1$. The commanded time $T_2$ and the commanded position $x_1$ enter the pulse distributor circuit 110X1. The commanded time $T_2$ is also applied to the comparator $109X_1$, in response to which the comparator $109X_1$ restarts the time comparison operation. Meanwhile, the pulse distributor circuit $110X_1$ executes the evaluation of Eqs. (1), (2) to obtain the incremental value $L_i$ and feedrate $F_i$, and executes a pulse distribution operation based on $L_i$, $F_i$ to generate distributed pulses $XP_1$. It should be noted that $L_i = x_1$, $F_i = x_1/(T_2 - T_1)$ since $L_t = x_1$, $L_a = 0$, $T_t = T_2$, $T_t = T_1$ in Eqs. (1), (2).

The distributed pulses $XP_1$ produced by the pulse distributor circuit $110X_1$ enter a servo circuit $113X_1$. An $X_1$-axis motor $114X_1$ rotates under the control of the servo circuit $113X_1$ so that the tool $TL_1$ (Fig. 3) starts to move (refer to segment $X_1$ in Fig. 4). By continuing the foregoing control operation, the tool $TL_1$ reaches a point $P_{11}$ in Fig. 3 at a time $t = T_2$.

When the relation $t = T_2$ is attained, the comparators $109X_1$, 109Z generate the time-over signals $TOX_1$, TOZ, in response to which the pulse distributor circuit $110X_1$ immediately halts the pulse distribution operation. Moreover, the states $SN_1$, $SN_4$ of counters $111X_1$, 111Z attain values of 3, 2, respectively, and the processor 101 is interrupted. Upon being interrupted, the processor 101 reads the contents of counters $111X_1$, 111Z and, using the states $SN_1$, $SN_4$, goes to the RAM 106 to read a third item of NC data $T_3$, $x_1$; with regard to the $X_1$ axis and a second item of NC data $T_4$, $(z_1 + z_2)$; with regard to the Z axis, these then being set in the registers $107X_1$, 107Z, respectively. Of the NC data $T_3$, $x_1$; for the $X_1$ axis, the commanded time $T_3$ is applied to the comparator $109X_1$ and pulse distributor circuit $110X_1$, and the commanded position $x_1$ is applied to the pulse distributor circuit $110X_1$. Of the NC data $T_4$, $(z_1 + z_2)$; for the Z axis, the commanded time $T_4$ is applied to the comparator 109Z and pulse distributor circuit 110Z, and the commanded position $(z_1 + z_2)$ is applied to the pulse distributor circuit 110Z. Thereafter, the comparators $109X_1$, 109Z resume the time comparison operations. Meanwhile, the pulse distributor circuits $110X_1$, 110Z evaluate the Eqs. (1), (2) to obtain the incremental value $L_i$ and the feedrate $F_i$ and execute pulse distribution operations based on these values. With regard to the $X_1$ axis, $L_i = 0$, $F_i = 0$ will hold. As a result, no distributed pulses are generated and movement stops along the $X_1$ axis. Further, since

$L_i = (z_1 + z_2)$, $F_i = (z_1 + z_2)/(T_4 - T_2)$ will hold for the Z axis, distributed pulses ZP are generated and enter a servo circuit 113Z. As a result, a Z-axis motor 114Z rotates so that the workpiece WK (Fig. 3) starts to be moved along the $+ Z$ axis (refer to segment Z in Fig. 1). The tool $TL_1$ consequently travels relative to the workpiece WK, i.e., along a straight line segment $L_1$ (Fig. 3) to perform cutting. By continuing the foregoing control operation, the tool $TL_1$ moves relative to the workpiece and arrives at a point $P_{12}$ in Fig. 3 at the instant $t = T_3$ is attained.

Meanwhile, when $t = T_3$ is attained, the comparator $X_1$ generates the time-over signal $TOX_1$ to increment the state $SN_1$ of counter $111X_1$ to 4 and interrupt the processor 101. Upon being interrupted, the processor 101 reads the state $SN_1$ ($= 4$) of counter $111X_1$, goes to the RAM 106 to read a fourth item of NC data $T_4$, $x_4$; and sets the data in the register $107X_1$. Of the NC data set in the register $107X_1$, the commanded time $T_4$ is applied to the comparator $109X_1$ and pulse distributor circuit $110X_1$, and the commanded position $x_4$ is applied to the pulse distributor circuit $110X_1$. Thereafter, the comparator $109X_1$ resumes the time comparison operation, and the pulse distributor $110X_1$ evaluates the Eqs. (1), (2) to obtain the incremental value $L_i$ and the feedrate $F_i$ and execute pulse distribution operations based on these values. It should be noted that $L_i = (x_4 - x_1)$, $F_i = (x_1 - x_4)/(T_4 - T_3)$.

As a result, simultaneous two-axis control is exercised along the $X_1$ and Z axes so that the tool $TL_1$ is moved along a line segment $L_2$ (Fig. 3) to perform taper cutting. By continuing taper machining, the tool $TL_1$ will reach a point $P_{13}$ at the instant $t = T_4$ is attained.

When the relation $t = T_4$ is attained, the comparators $109X_1$, 109Z generate the time-over signals $TOX_1$, TOZ, in response to which the pulse distributor circuits $110X_1$, 110Z immediately halt their pulse distribution operations. Moreover, the states $SN_1$, $SN_4$ of counters $111X_1$, 111Z attain values of 5, 3, respectively, and the processor 101 is interrupted. Upon being interrupted, the processor 101 reads the contents of counters $111X_1$, 111Z and, using the states $SN_1$, $SN_4$, goes to the RAM 106 to read a fifth item of NC data $T_4'$, 0; with regard to the $X_1$ axis and a third item of NC data $T_5$, 0; with regard to the Z axis, these then being set in the registers $107X_1$, 107Z, respectively. After this has been accomplished, these data are applied to the comparators $109X_1$, 109Z and to the pulse distributor circuits $110X_1$, 110Z. Thereafter, control similar to the foregoing is carried out to return the tool $TL_1$ to its initial position at time $T_4'$ and to return the workpiece WK to its initial position at time $T_5$, so that the relation between the workpiece and each of the tools will be as shown in Fig. 3. When the relation $t = T_5$ is attained, the state $SN_4$ of the counter 111Z takes on a numerical value of 4 and a fourth item of NC data $T_9$, 0; relating to the Z axis is set in the register 107Z. Since $L_i = 0$ will hold, however, there is no movement of the workpiece WK along the Z axis so that the workpiece is at rest until $t = T_9$ is achieved. Further, when the relation $t = T_4'$ is attained, the state $SN_1$ of the counter $111X_1$ takes on a numerical value of 6, so that the processor 101 reads a sixth item of NC data concerning the $X_1$ axis out of the RAM 106. Since the sixth item of NC data is M99;, however, the processor 101 identifies this as indicating the end of control along the $X_1$ axis.

Thereafter, the comparator $X_2$ generates the time-over signal $TOX_2$ when the relation $t = T_6$ is attained. As a result, the state $SN_2$ of the counter $X_2$ takes on a numerical value of 2, so that the processor 101 reads a second item of NC data $T_7$, $x_2$; concerning the $X_2$ axis out of the RAM 106 and sets the data in the register $107X_2$. The commanded time $T_7$ and the commanded position $x_2$ enter the pulse distributor circuit $110X2$. The commanded time $T_7$ is also applied to the comparator $109X_2$, in response to which the comparator $109X_2$ restarts the time comparison operation. Meanwhile, the pulse distributor circuit $110X_2$ executes the evaluation of Eqs. (1), (2) to obtain the incremental value $L_i$ and feedrate $F_i$, and executes a pulse distribution operation based on $L_i$, $F_i$ to generate distributed pulses $XP_2$. It should be noted that $L_i = x_2$, $F_i = x_2/(T_7 - T_6)$.

The distributed pulses $XP_2$ produced by the pulse distributor circuit $110X_2$ enter a servo circuit $113X_2$. An $X_2$-axis motor 114X2 rotates under the control of the servo circuit $113X_2$ so that the tool $TL_2$ (Fig. 3) starts to move (refer to segment $X_2$ in Fig. 4). The tool $TL_2$ reaches a point $P_2$ in Fig. 3 at a time $t = T_7$.

Thereafter, control similar to the foregoing is carried out to return the tool $TL_2$ to its initial position at $t = T_8$. At the same time that the tool $TL_2$ is returned to its initial position, the tool $TL_3$ starts travelling (see segment $X_3$ in Fig. 3) and stops upon arriving at a point $P_{31}$ (Fig. 3) at time $T_9$. When time $T_9$ is reached, the workpiece WK travels a distance $z_3$ along the $+Z$ axis until time $t_{10}$. In other words, the tool $TL_3$ travels relative to the workpiece WK along a straight line $L_3$ to perform cutting. The tool $TL_3$ and workpiece Wk subsequently return to their initial positions and control for machining the part having the shape shown in Fig. 3 ends.

According to the foregoing description, the arrangement is such that a subsequent item of NC data is read out of the RAM 106 whenever a time-over signal is generated. However, an arrangement is permissible wherein two blocks of NC data are read at all times by means of a prereading technique. It is also possible to provide the NC data with an M-function instruction or the like. Furthermore, while the NC data have been created so as to specify a relation between time and position by using a time chart, it is also possible to create NC data so as to specify a relation between a rotational angle and position by using a Q-$\ell$ table in which a rotational angle Q is taken as a horizontal axis and position $\ell$ is taken as a vertical axis. Fig. 7 is a block diagram of an embodiment for a case where NC data are created by using a Q-$\ell$ table. Fig. 8 is an example of a pulse distributor circuit in such case.

Fig. 7 differs from Fig. 2 in that (1) the timer 108 of Fig. 2 is supplanted by a pulse generator 202 for generating one rotation pulse RP each time a motor 201 driving a rotary shaft rotates through a predetermined angle, and by a counter 203 for monitoring the rotational angle by counting the rotation pulses RP generated by the pulse generator 202, (2) a value (rotational angle) A counted by the counter 203 is applied as an input to each of the comparator circuits $109X_1$, $109X_2$, $109X_3$, 109Z and (3) the rotation pulses RP are applied as inputs to the pulse distributor circuits $110X_1$, $110X_2$, $110X_3$, 110Z.

The comparators $109X_1$, $109X_2$, $109X_3$, 109Z compare rotational angles $A_1$, $A_2$, $A_3$, $A_4$ specified by NC data with the actual rotational angle A produced by the counter 203. When agreement is attained, the comparators produce respective arrival signals $AR_1$, $AR_2$, $AR_3$, $AR_4$ instead of the time-over signals $TOX_1$, $TOX_2$, $TOX_3$, $TOX_4$ of Fig. 2. The arithmetic unit SPMC (Fig. 8) of each of the pulse distributor circuits $110X_1$, $110X_2$, $110X_3$, 110Z calculates the incremental value $L_i$, which is the difference between the position $L_t$ commanded by the NC data and the commanded position $L_a$ of the preceding block stored in the position register APR, and delivers the incremental value to the pulse interpolator PIC. The latter produces distributed pulses by executing a well-known pulse interpolation calculation based on the incremental value $L_i$ whenever the rotation pulse RP is generated.

According to the present invention, the arrangement is such that correspondence between time and position, or between rotational angle and position, is created for each controlled axis. NC data can therefore be created in a simple manner from a time chart or Q-$\ell$ table. In addition, according to the present invention, the apparatus is so constructed as to enable NC control on a time or rotational angle basis so that numerical control can be performed by using the aforementioned NC data. The invention is therefore extremely effective when applied to a multi-spindle automatic lathe.

## Claims

1. A method for numerically controlling a machine tool having a plurality of tools $(TL_1, TL_2, TL_3)$ each movable along its own respective axis, the positions of the tools $(TL_1, TL_2, TL_3)$ being controlled in dependence upon NC data provided in a suitable storage medium (105,106), said method comprising specifying in said NC data the desired positions of each tool at respective successive instants in time, monitoring elapsed time during operation of the machine tool and, when any instant of time specified for any tool is reached, subsequently using the next following stored data relevant to that tool to control the movement of that tool up to the next instant of time again specified for that tool, whereby the tools $(TL_1, TL_2, TL_3)$ are controlled independently of one another but in such a way that they can operate upon a single workpiece, the tools all being in respective predetermined positions at predetermined times.

2. A method according to claim 1, wherein said machine tool is a multi-spindle lathe and said tool axes are directed towards the longitudinal axis of a workpiece, and the method includes controlling movement of the workpiece along its longitudinal axis in the same manner as movement of each tool along its own tool axis is controlled.

3. A method according to claim 1 or 2, comprising steps of calculating velocity from time data and position data, and generating pulses of a frequency proportional to said velocity by a pulse interpolation calculation, a position along an axis of movement being controlled by said pulses.

4. A method for numerically controlling a machine tool having a plurality of tools $(TL_1, TL_2, TL_3)$ each movable along its own respective axis, the positions of the tools $(TL_1, TL_2, TL_3)$ being controlled in dependence upon NC data provided in a suitable storage medium (105,106), said method comprising specifying in said NC data the desired positions of each tool at respective successive rotational angles of a predetermined rotary shaft, monitoring the rotational angle of said shaft during operation of the machine tool and, when any shaft rotational angle specified for any tool is reached, subsequently using the next following stored data relevant to that tool to control the movement of that tool up to the next shaft rotational angle again specified for that tool, whereby the tools

$(TL_1, TL_2, TL_3)$ are controlled independently of one another but in such a way that they can operate upon a single workpiece, the tools all being in respective predetermined positions at predetermined shaft rotational angles.

5. A method according to claim 4, wherein said machine tool is a multi-spindle lathe and said tool axes are directed towards the longitudinal axis of a workpiece, and the method includes controlling movement of the workpiece along its longitudinal axis in the same manner as movement of each tool along its own tool axis is controlled.

6. A method according to claim 5, wherein a rotational angle sensor generates a pulse whenever said rotary shaft rotates through a predetermined angle, and a pulse interpolation calculation is effected using NC position data whenever such pulse is generated, a position along an axis of movement being controlled by further pulses provided by said pulse interpolation calculation,

## Revendications

1. Un procédé pour la commande numérique d'une machine-outil comprenant un ensemble d'outils $(TL_1, TL_2, TL_3)$ dont chacun est mobile le long de son axe propre, les positions des outils $(TL_1, TL_2, TL_3)$ étant commandées en fonction de données CN prévues dans un support de stockage approprié (105, 106), ledit procédé comprenant la spécification dans lesdites données CN des positions souhaitées de chaque outil pour des instants respectifs successifs dans le temps, la surveillance du temps écoulé pendant le fonctionnement de la machine-outil et, lorsqu'un instant quelconque spécifié pour un quelconque outil est atteint, l'emploi ultérieur des données stockées suivantes concernant cet outil pour commander le mouvement de cet outil jusqu'au prochain instant encore spécifié pour cet outil, de sorte que les outils $(TL_1, TL_2, TL_3)$ sont commandés indépendamment l'un de l'autre mais de manière telle qu'ils puissent agir sur une seule pièce, les outils étant tous dans des positions respectives prédéterminées pour des instants prédéterminés.

2. Un procédé selon la revendication 1, dans lequel ladite machine-outil est un tour à broches multiples et lesdits axes d'outil sont orientés en direction de l'axe longitudinal d'une pièce, et dans lequel le procédé comprend la commande du mouvement de la pièce le long de son axe longitudinal de la même manière qu'est commandé le mouvement de chaque outil le long de son axe propre.

3. Un procédé selon la revendication 1 ou 2, comprenant des opérations de calcul d'une vitesse à partir des donnés de temps et des données de position, et la formation d'impulsions ayant une fréquence proportionnelle à ladite vitesse grâce à un calcul d'interpolation des impulsions, une position le long d'un axe de mouvement étant commandée par lesdites impulsions.

4. Un procédé pour la commande numérique d'une machine-outil comprenant un ensemble d'outils (TL$_1$, TL$_2$, TL$_3$) mobiles chacun le long de son axe propre, les positions des outils (TL$_1$, TL$_2$, TL$_3$) étant commandées en fonction de données CN prévues dans un support de stockage approprié (105, 106), ledit procédé comprenant la spécification dans lesdites données CN des positions souhaitées de chaque outil pour des angles de rotation successifs respectifs d'un arbre rotatif prédéterminé, la surveillance de l'angle de rotation dudit arbre pendant le fonctionnement de la machine-outil et, lorsqu'un quelconque angle de rotation d'arbre spécifié pour un quelconque outil est atteint, l'emploi ultérieur des données stockées suivantes concernant cet outil pour commander le mouvement de cet outil jusqu'au prochain angle de rotation d'arbre encore spécifié pour cet outil, de sorte que les outils (TL$_1$, TL$_2$, TL$_3$) sont commandés indépendamment l'un de l'autre mais de manière à pouvoir agir sur une seule pièce, les outils se trouvant tous dans des positions respectives prédéterminées pour des angles prédéterminés de rotation des arbres.

5. Un procédé selon la revendication 4, dans lequel ladite machine-outil est un tour à broches multiples et lesdits axes d'outils sont orientés en direction de l'axe longitudinal d'une pièce, et dans lequel le procédé comprend la commande du mouvement de la pièce le long de son axe longitudinal de la même manière qu'est commandé le mouvement de chaque outil le long de son propre axe.

6. Un procédé selon la revendication 5, dans lequel un capteur d'angle de rotation forme une impulsion à chaque fois que ledit arbre rotatif tourne d'un angle prédéterminé, et dans lequel un calcul d'interpolation des impulsions est effectué en utilisant des données CN de position à chaque fois qu'une telle impulsion est formée, une position le long d'un axe de mouvement étant commandée par d'autres impulsions formées par ledit calcul d'interpolation des impulsions.

## Ansprüche

1. Verfahren zur numerischen Steuerung einer Werkzeugmaschine, die eine Vielzahl von Werkzeugen (TL$_1$, TL$_2$, TL$_3$) hat, wovon jedes längs seiner eigenen betreffenden Achse bewegbar ist, wobei die Positionen der Werkzeuge (TL$_1$, TL$_2$, TL$_3$) in Abhängigkeit von numerischen Steuer- (NC-) Daten gesteuert werden, die in einem geeigneten Speichermedium (105, 106) vorgesehen sind, welches Verfahren Schritte umfaßt zum Spezifizieren der gewünschten Positionen jedes Werkzeugs zu betreffenden aufeinanderfolgenden Zeitpunkten in den NC-Daten, Überwachen der abgelaufenen Zeit während des Betriebs der Werkzeugmaschine und, wenn irgendein Zeitpunkt, der für irgendein Werkzeug spezifiert ist, erreicht ist, anschließendem Benutzen der nächstfolgend gespeicherten Daten, die für das Werkzeug relevant sind, um die Bewegung des Werkzeugs bis zu dem nächsten Zeitpunkt zu steuern, der wiederum für das Werkzeug spezifiziert ist, wodurch die Werkzeuge (TL$_1$, TL$_2$, TL$_3$) unabhängig voneinander, jedoch in einer Weise gesteuert werden, daß sie auf ein einziges Werkstück einwirken können, wobei sich die Werkzeuge alle zu vorbestimmten Zeitpunkten in betreffenden vorbestimmten Positionen befinden.

2. Verfahren nach Anspruch 1, bei dem die Werkzeugmaschine eine Mehrspindel-Drehbank ist und die Werkzeugachsen auf die Längsachse eine Werkstücks gerichtet sind und wobei das Verfahren das Steuern der Bewegung des Werkstücks längs seiner Längsachse in gleicher Weise beinhaltet, wie die Bewegung jedes Werkzeugs längs seiner eigenen Werkzeugachse gesteuert wird.

3. Verfahren nach Anspruch 1 oder 2, das Schritte umfaßt zum Berechnen der Geschwindigkeit aus Zeitdaten und Positionsdaten und zum Erzeugen von Impulsen einer Frequenz, die proportional zu der Geschwindigkeit ist, durch eine Impulsinterpolations-Berechnung, wobei eine Position längs einer Achse der Bewegung durch die Impulse gesteuert wird.

4. Verfahren zur numerischen Steuerung einer Werkzeugmaschine, die eine Vielzahl von Werkzeugen ($TL_1$, $TL_2$, $TL_3$) hat, wovon jedes längs seiner eigenen betreffenden Achse bewegbar ist, wobei die Positionen der Werkzeuge ($TL_1$, $TL_2$, $TL_3$) in Abhängigkeit von numerischen Steuer- (NC-)Daten gesteuert werden, die in einem geeigneten Speichermedium (105, 106) vorgesehen sind, welches Verfahren Schritte umfaßt zum Spezifizieren der gewünschten Positionen jedes Werkzeugs bei betreffenden aufeinanderfolgenden Drehwinkeln einer vorbestimmten drehenden Welle in den NC-Daten, Überwachen des Drehwinkels der Welle während des Betriebs der Werkzeugmaschine und,wenn irgendein Wellen-Drehwinkel, der für irgendein Werkzeugt spezifiziert ist, erreicht ist, anschließendem Benutzen der nächstfolgend gespeicherten Daten, die für dieses Werkzeug relevant sind, um die Bewegung dieses Werkzeugs bis zu dem nächsten Wellen-Drehwinkel zu steuern, der wiederum für dieses Werkzeug spezifiziert ist, wodurch die Werkzeuge ($TL_1$, $TL_2$, $TL_3$) unabhängig voneinander, jedoch in einer Weise, daß sie auf ein einziges Werkstück einwirken können, gesteuert werden, wobei sich die Werkzeuge alle in betreffenden vorbestimmten Positionen bei vorbestimmten Wellen-Drehwinkeln befinden.

5. Verfahren nach Anspruch 4, bei dem die Werkzeugmaschine eine Mehrspindel-Drehbank ist und die Werkzeugachsen auf die Längsachse eines Werkstücks gerichtet sind und wobei das Verfahren das Steuern der Bewegung des Werkstücks längs seiner Längsachse in gleicher Weise beinhaltet, wie die Bewegung jedes Werkzeugs längs seiner eigenen Werkzeugachse gesteuert wird.

6. Verfahren nach Anspruch 5, bei dem ein Drehwinkel-Sensor immer dann einen Impuls erzeugt, wenn sich die drehende Welle um einen vorbestimmten Winkel dreht, und eine Impulsinterpolations-Berechnung unter Benutzung von NC-Positionsdaten immer dann bewirkt wird, wenn ein derartiger Impuls erzeugt ist, und wobei eine Position längs einer Achse der Bewegung durch weitere Impulse gesteuert wird, die durch die Impulsinterpolations-Berechnung erzeugt werden.

## Fig. 1

## Fig. 3

## Fig. 4

Fig. 2

EP 0 137 857 B1

## Fig. 5

| $X_1$ Axis | $X_2$ Axis | $X_3$ Axis | $Z$ Axis |
|---|---|---|---|
| T1, 0 | T6, 0 | T8, 0 | T2, 0 |
| T2, $X_1$ | T7, $X_2$ | T9, $X_3$ | T4, $(\beta_1+\beta_2)$ |
| T3, $X_1$ | T8, 0 | T10, $X_3$ | T5, 0 |
| T4, $X_4$ | M 99;. | T11, 0 | T9, 0 |
| T4', 0 | | M 99; | T10, $\beta_3$ |
| M 99; | | | T11, 0 |
| | | | M 99; |

## Fig. 6

Tt, Lt

TR — Ta

Tt

Lt — La

APR

SPMC

PIC

## Fig. 8

Lt

RP

Lt — La

APR

SPMC

PIC

11

Fig - 7

EP 0 137 857 B1